# FASCICULE DE BREVET EUROPEEN

(11) **EP 1 086 561 B1**
(45) Date de publication et mention de la délivrance du brevet: **24.10.2007**
(21) Numéro de dépôt: 99923665.6
(22) Date de dépôt: 03.06.1999
(51) Int. Cl.: H04L 29/06, H04L 12/24

(54) **INTERFONCTIONNEMENT ENTRE DES EQUIPEMENTS PAR PAGE D'ACCUEIL HYPERTEXTE**
ZUSAMMENARBEIT VON EINRICHTUNGEN BEI HYPERTEXT SEITEN
INTERRELATED FUNCTIONING BETWEEN EQUIPMENT ITEMS THROUGH HYPERTEXT HOME PAGE

(30) Priorité: 10.06.1998 FR 9807400
(43) Date de publication de la demande: 28.03.2001
(73) Titulaire: FRANCE TELECOM, 75015 Paris (FR); TDF, 75015 Paris (FR)
(72) Inventeur: MARTINIERE, Jean-Pierre, F-35340 Liffre (FR)
(74) Mandataire: Cabinet Martinet & Lapoux
(86) Numéro de dépôt international: PCT/FR1999/001315
(87) Numéro de publication internationale: WO 1999/065203

(56) Documents cités:
- US-A- 5 742 762
- LARSEN A K: "THE NEXT WEB WAVE: NETWORK MANAGEMENT" DATA COMMUNICATIONS, vol. 25, no. 1, 1 janvier 1996 (1996-01-01), page 31/32, 34 XP000545237
- BAY NETWORKS: "Feature brief: Optivity Web" OPTIVITY WEB, - novembre 1996 (1996-11) pages 1-3, XP002911419

## Description

La présente invention concerne l'interfonctionnement de plusieurs équipements électroniques reliés entre eux. Plus particulièrement, elle concerne le groupement d'équipements afin d'accéder aisément depuis n'importe quel équipement à toutes les fonctions disponibles dans les autres équipements.

L'explosion des services offerts à travers les réseaux de transmission de données à débit élevé tel que le réseau Internet et la multiplicité d'outils matériels et logiciels disponibles entraînent les concepteurs d'équipements électroniques et notamment de terminaux à orienter de plus en plus leurs développements dans l'environnement d'accès à ces réseaux.

L'invention est ainsi dirigée vers l'interfonctionnement évolutif d'équipements, appareils ou terminaux, le plus souvent hétérogènes dans l'environnement d'accès aux réseaux de transmission de données à débit élevé. Un équipement peut être un appareil ou terminal déjà conçu ou adapté dans le cadre de solutions Internet, en utilisant des hyperliens, une présentation HTML (HyperText Markup Language), des fonctions de type client/serveur à l'aide du protocole HTTP (Hypertext Transfert Protocol), etc. Un équipement peut être aussi tout type d'appareil dont une évolution vers un fonctionnement hypertexte est très probable, tel que télécopieur, imprimante, poste téléphonique fixe ou mobile, répondeur - enregistreur, terminal vidéotex (MINITEL) - Internet, magnétoscope, téléviseur, centrales de télésurveillance, de télé-relevés ou de télé-maintenance et plus généralement centrales domotiques de télécommande et télésurveillance et dispositifs de commande et/ou d'alarme communiquant avec celles-ci, bornes téléphoniques d'accès à des services placées dans des lieux publics, cartes ou périphériques intégrés ou reliés à un micro-ordinateur, etc.

Les protocoles CMIP (Common Management Information Control) et SNMP (Simple Network Management Protocol) participent actuellement à l'administration du fonctionnement et du trafic dans le réseau Internet, mais également dans un réseau Intranet, c'est-à-dire entre des équipements regroupés localement. Ces protocoles n'utilisent pas des fonctionnements hypertexte. Le protocole CMIP est complexe à mettre en oeuvre et à exploiter, et mal adapté à de petits équipements. Le protocole SNMP utilisé particulièrement pour les réseaux locaux entraîne de très nombreux échanges réguliers entre un moyen d'administration central et plusieurs équipements agents administrés, et une synchronisation difficile de ces équipements. En outre, l'authentification d'un équipement agent par le moyen d'administration central n'est pas garantie, et des "traps", c'est-à-dire des alertes transmises par les équipements agents au moyen d'administration peuvent être perdues.

Par ailleurs, après insertion sur le bus d'un micro-ordinateur de carte(s) correspondant à la partie matérielle nécessaire à une application, le concept de "plug and play" permet, dans un environnement WINDOWS (marque déposée), mais non suivant des principes de fonctionnement hypertexte, la reconnaissance automatique de nouvelles applications. L'intégration et/ou l'utilisation de l'application nécessite plusieurs interventions de l'utilisateur du micro-ordinateur pour ouvrir des boîtes de dialogue et/ou pour lancer un programme exécutable. Aucun automatisme n'est prévu pour qu'un signe, tel qu'une désignation textuelle ou imagée, invite l'usager à utiliser l'application. Il en est de même lorsque plusieurs micro-ordinateurs avec différentes applications sont à connecter en réseau local.

Selon le document Bay Networks: "Feature Brief: Optivity Web", novembre 1996, pages 1-3, pour gérer des dispositifs sur la base du protocole SNMP, un centre de commande d'entreprise divise l'affichage une sous-fenêtre supérieure pour montrer un campus, une sous-fenêtre médiane pour des dossiers de dispositif sélectionnables et une sous-fenêtre inférieure pour des dispositifs individuels contenus dans le dossier de dispositif sélectionné par l'usager. Une fois qu'un dispositif individuel est sélectionné, la sous-fenêtre inférieure change en une liste d'applications qui peuvent être exécutées pour ce dispositif. Mais les dispositifs individuels conservent leurs fonctions propres sans un quelconque partage de celles-ci entre eux.

L'invention vise à remédier aux insuffisances de la technique antérieure évoquées ci-dessus, de manière à constituer virtuellement un équipement de groupe ou terminal évolutif regroupant tout ou partie de fonctions disponibles dans des équipements mis en interfonctionnement. Grâce à l'invention, les fonctions des équipements du groupe sont accessibles à partir de n'importe quel équipement du groupe.

A cette fin, un procédé pour mettre en interfonctionnement plusieurs équipements primaires et un équipement gestionnaire adaptés à utiliser chacun des liens vers des fonctions d'équipement, l'équipement gestionnaire étant susceptible de communiquer avec tous les équipements primaires à travers un système de transmission, est tel que caractérisé dans la revendication 1.

De préférence, la page d'accueil est chargée depuis l'équipement gestionnaire dans au moins l'un des équipements en tant que page d'accueil pour tous les équipements, afin que ledit au moins un équipement primaire puisse mettre en oeuvre les fonctions des autres équipements.

Un "lien vers une fonction de l'équipement" au sens de l'invention peut être un hyperlien permettant une navigation vers d'autres pages, ou une commande incluse dans un formulaire, ou une commande de l'équipement lui-même inclus dans une représentation multidimensionnelle.

Par la constitution dynamique d'une page d'accueil, l'interfonctionnement d'équipements en groupe est possible. Chacun des équipements regroupés selon l'invention est accessible et utilisable à partir de n'importe quel équipement du groupe.

Le groupement des équipements primaires selon l'invention fait évoluer les fonctionnalités des équipements primaires, par exemple des appareils ou terminaux existants, tels que terminal MINITEL-Internet, télécopieur, téléphone, téléviseur, magnétoscope, etc. A l'inverse, l'invention contribue à la constitution d'un terminal éclaté autour de l'équipement gestionnaire, offrant en plus les fonctionnalités des équipements primaires. La mise en commun des ressources disponibles de tous les équipements groupés offre un ensemble de fonctions à moindre coût, avec un meilleur confort d'utilisation.

La présentation de chaque équipement peut comprendre une présentation textuelle et/ou imagée évocatrice de l'équipement et/ou d'au moins une fonction réalisable par l'équipement. Les présentations peuvent être affichées en plusieurs modes d'affichage respectivement dans des équipements et/ou dans au moins l'un des équipements, les modes d'affichage étant de préférence en mode texte et en mode image. La page d'accueil dans chaque équipement est alors visualisée suivant au moins l'un de modes d'affichage utilisés dans l'équipement. Par exemple l'écran d'un micro-ordinateur visualise les présentations en mode texte et en mode image, et la barrette d'affichage d'un télécopieur affiche les présentations seulement en mode texte.

Plus précisément, la présentation d'un équipement dans la page d'accueil peut être une ancre de départ d'un hyperlien lié à une page de fonctions lue dans l'équipement et contenant des liens vers des fonctions de l'équipement.

Lors d'une première connexion d'un équipement primaire à l'équipement gestionnaire, une adresse est attribuée dynamiquement à l'équipement primaire par l'équipement gestionnaire et est transmise avec la page d'accueil par l'équipement gestionnaire aux équipements primaires afin que dans tous les équipements, des tables faisant correspondre les adresses d'équipement aux présentations soient mises à jour. Au moyen de la table dans un premier équipement donné, la sélection de la présentation d'un deuxième équipement dans la page d'accueil affichée dans le premier équipement initialise l'hyperlien entre la présentation sélectionnée et le deuxième équipement pour y lire par exemple une page de sommaire de fonctions exécutables par le deuxième équipement.

Selon une variante de l'invention, l'étape de constituer une page d'accueil est effectuée au moins partiellement en dehors de l'équipement gestionnaire, dans un moyen secondaire pouvant être relié à l'équipement gestionnaire à travers un réseau téléphonique ou local. Le moyen secondaire matériellement distinct de l'équipement gestionnaire, tel qu'un serveur donnant accès à une base d'images, ou une carte vidéo avec écran relié à l'unité centrale d'un micro-ordinateur, permet par exemple une utilisation plus ergonomique des équipements primaires par le biais d'une interface homme-machine plus évoluée.

Notamment lorsque les moyens d'affichage d'équipements primaires ont une surface d'application relativement petite, l'étape de constituer une page d'accueil peut comprendre une répartition des présentations d'équipements en des pages filles et une constitution d'une page mère avec des hyperliens vers les pages filles.

Selon une autre variante, l'étape de constituer une page d'accueil comprend la constitution de pages d'accueil par l'équipement gestionnaire afin de charger les pages d'accueil dans des équipements primaires, chacune des pages d'accueil comprenant la présentation de l'équipement primaire respectif et des présentations d'applications dans l'équipement gestionnaire dédiées à l'équipement primaire respectif. Cette variante est particulièrement destinée à des équipements primaires "individuels" en relations indépendantes les unes des autres avec l'équipement gestionnaire gérant tous les équipements du groupe.

Selon encore une autre variante, l'étape de constituer une page d'accueil comprend la constitution d'une page d'accueil seulement avec les présentations des autres équipements primaires déjà mis en relation et la présentation de l'équipement primaire donné, afin de charger la page d'accueil depuis l'équipement gestionnaire dans tous les équipements primaires en tant que page d'accueil pour tous les équipements primaires.

Dans cette variante, l'équipement gestionnaire n'a pas d'écran et est assisté par un moyen secondaire matériellement distinct de l'équipement gestionnaire et offrant des facilités à l'usager plus ergonomiques et évoluées.

Notamment, les groupements particuliers suivants entrent dans le cadre de l'invention:
- l'équipement gestionnaire et des équipements primaires sont reliés entre eux à travers un système de transmission sans fil, ou à travers un système de transmission à courant porteur, et sont respectivement un terminal pouvant être relié à un réseau téléphonique et des appareils électroniques ;
- l'équipement gestionnaire et des équipements primaires sont reliés entre eux à travers un système de transmission sans fil, ou à travers un système de transmission à courant porteur, et sont respectivement un micro-ordinateur et des terminaux, les terminaux étant reliés à un réseau téléphonique ; ce groupement est particulièrement bien adapté lorsque l'équipement gestionnaire compose des pages d'accueil respectivement dédiées à des équipements primaires donnés et comprenant la présentation de l'équipement primaire respectif et des présentations d'applications dédiées dans l'équipement gestionnaire, afin que la plupart des équipements primaires bénéficient des facilités de l'équipement gestionnaire plus perfectionné;
- l'équipement gestionnaire et des équipements primaires sont une unité centrale de micro-ordinateur et des cartes électroniques connectées à un bus de l'unité centrale.

L'équipement gestionnaire est appelé dans la suite de la description "équipement manager".

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est un bloc-diagramme schématique d'un groupe d'équipement comprenant un équipement manager MINITEL-Internet et des équipements primaires reliés par un système de transmission sans fil ;
- la figure 2 est un algorithme du procédé de mise en relation d'équipements selon l'invention, particulièrement lors de la première connexion d'un équipement primaire à un équipement manager en référence au premier exemple de mise en oeuvre montré à la figure 1 ;
- la figure 3 montre des présentations de deux équipements formant un groupe selon un deuxième exemple ;
- la figure 3A montre une page d'accueil vue sur un écran de l'un de deux équipements selon le deuxième exemple, ainsi que des pages de sommaire relatives aux deux équipements et vues sur l'écran ;
- la figure 3B montre une page d'accueil vue sur une barrette d'affichage dans l'autre des deux équipements selon le deuxième exemple, ainsi que des pages de sommaire relatives aux deux équipements et vues sur la barrette d'affichage ;
- la figure 4 montre des présentations de deux équipements formant un groupe selon un troisième exemple ;
- la figure 4D montre une page d'accueil vue sur un écran de l'un de deux équipements selon le troisième exemple, ainsi que des pages de sommaire relatives aux deux équipements et vues sur l'écran ;
- la figure 4E montre une page d'accueil vue sur une barrette d'affichage de l'autre des deux équipements selon le troisième exemple, ainsi que des pages de sommaire relatives aux deux équipements et vues sur la barrette d'affichage ;
- la figure 5 montre des présentations de quatre équipements formant un groupe selon un quatrième exemple ;
- la figure 6 montre une page d'accueil mère du groupe de quatre équipements selon le quatrième exemple ainsi que deux pages d'accueil filles sélectionnées par des hyperliens en mode texte depuis la page mère ;
- la figure 7 est un bloc-diagramme schématique d'un groupe de trois équipements selon un cinquième exemple ;
- la figure 8 est un bloc-diagramme schématique d'un groupe de six équipements selon un sixième exemple ;
- la figure 9 montre des pages d'accueil de quatre terminaux MINITEL-Internet inclus en tant qu'équipements, primaires dans le groupe d'équipements selon le sixième exemple ; et
- la figure 10 est un bloc-diagramme schématique d'un groupe de six équipements selon un septième exemple dans lequel quatre équipements primaires sont des cartes électroniques.

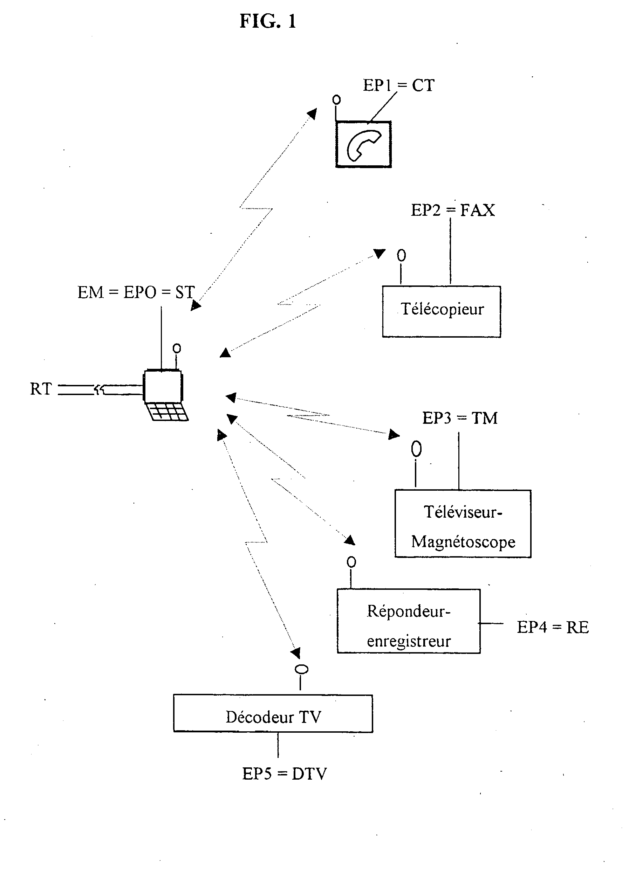

Afin de mieux comprendre les étapes du procédé de l'invention, celui-ci est d'abord décrit en détail en se référant à une première mise en oeuvre du procédé illustrée à la figure 1, dans un système local de transmission sans fil selon la norme européenne de radiocommunication vocale numérisée DECT (Digital European Cordless Telecommunications) par exemple. Dans la figure 1, un terminal d'accès Internet est équipé d'un modem et relié par ligne téléphonique d'usager à un réseau téléphonique RT. Il constitue une station de base ST mis en relation à travers le système local de transmission sans fil avec des périphériques "mobiles" tels qu'un combiné téléphonique CT, un télécopieur FAX, un téléviseur-magnétoscope TM, un répondeur - enregistreur RE, et un décodeur DTV décodant des signaux de télévision retransmis par satellite.

Au sens de l'invention, la station de base ST et les périphériques mobiles CT, FAX, TM, RE et DTV constituent un **groupe d'équipements primaires** EP0 à EP5. Les fonctions des équipements primaires ne sont pas regroupées dans un seul appareil mais réparties physiquement suivant la relation "un appareil = une ou quelques fonctions", et le groupe d'équipements primaires EP0 à EP5 est équivalent à un "terminal éclaté". Chaque périphérique mobile CT, FAX, TM, RE, DTV est repéré sans ambiguïté par la station de base ST par des échanges de signaux protocolaires de transmission numérique. La station de base met en relation plusieurs périphériques mobiles et effectue des transmissions d'un périphérique mobile à un autre ou de la station de base vers un ou plusieurs périphériques mobiles. Chaque équipement selon la technique de transmission sans fil dispose d'un canal pour dialoguer avec la station de base et peut ouvrir un autre canal vers un autre périphérique.

L'équipement primaire EP0 à EP5 est défini comme un ensemble de moyens matériels et/ou logiciels réalisant et/ou donnant accès à, d'une manière indépendante et/ou autonome, une ou plusieurs fonctions de moyens connus, tels que téléphone, télécopieur, téléviseur, magnétoscope, carte dans un micro-ordinateur, terminal vidéotex, terminal d'accès Internet, répondeur, etc. Chaque équipement primaire EP0 à EP5 est capable d'accéder à toutes les fonctions que chaque autre équipement primaire du groupe met à disposition à travers une ou plusieurs pages incluant des liens qui a priori peuvent être multimédia, par exemple des hyperliens en langage HTML (HyperText Markup Language) ou compatible HTML (XML), des formulaires avec champ(s) de saisie et/ou boîte(s) à cocher et/ou bouton(s) radio, des éléments de présentation de type VRML, etc.

Grâce au regroupement de la fonction d'accès au réseau dé transmission de données à débit élevé Internet dans la station de base EP0 = ST et de la fonction d'impression du télécopieur EP2 = FAX, la fonction télécopie hérite de l'interface homme-machine beaucoup plus riche de la fonction "MINITEL-Internet" dans la station de base. Des pages WEB reçues de services en ligne sont imprimées à partir de la fonction "MINITEL-Internet".

Selon une autre utilisation, grâce au regroupement de la fonction d'accès au réseau de transmission de données à débit élevé Internet dans la station de base EP0 = ST et de la fonction de décodage de signaux de télévision codés dans le décodeur EP5 = DTV, le décodeur DTV ici volontairement simplifié, dans la mesure où il ne possède pas de clavier et/ou d'écran ou possède un clavier réduit et/ou un écran réduit, utilise dans l'interface homme-machine de la station de base le lecteur de carte du terminal MINITEL-Internet ainsi que ses possibilités d'accès à Internet pour des activités de télécommerce, ou bien pour un chargement de droits et/ou un paiement à l'acte afin de visualiser par le téléviseur - magnétoscope EP3 = TM un film sélectionné par exemple.

Afin de réaliser, suivant l'invention, l'interconnexion évolutive des équipements primaires EP0 à EP5 quels que soient les méthodes ou moyens de liaison des équipements primaires, tels que liaison radio, une couche de protocole appropriée ou quelques éléments de protocole sont insérés dans les équipements primaires. Des éléments de protocole d'attribution dynamique d'adresses de type DHCP (Dynamic Host Configuration Protocol, avec appel aux commentaires RFC (Request For Comments) 1541) conviennent. Chaque équipement primaire comporte au moins une "interface d'aide à la constitution dynamique d'une page d'accueil", c'est-à-dire des moyens matériels et logiciels nécessaires à l'interrogation de l'équipement primaire et à la transmission d'une demande d'attribution d'adresse IP (Internet - Protocol) par l'équipement primaire.

L'interface d'aide à la constitution dynamique d'une page d'accueil dans un équipement primaire est utilisée lors de l'adjonction de l'équipement primaire au groupe, ou bien lors de l'adjonction de tout autre équipement primaire au groupe.

Dans l'un des équipements primaires EP0 à EP5, appelé ci-après **équipement manager EM,** est incluse une interface de "constitution dynamique d'une page d'accueil" utilisée ponctuellement pour effectuer la reconnaissance et l'association des équipements à regrouper par attribution d'adresses IP et la constitution d'une page d'accueil de groupe PG. En variante, l'interface définissant l'équipement manager est en partie fonctionnellement déportée vers un équipement secondaire et a des tâches exécutées ou activées à partir de l'équipement secondaire spécialisé. L'équipement secondaire est accessible à travers le réseau téléphonique RT ou un réseau local, destiné au regroupement des équipements primaires, mais n'appartient pas lui-même aux équipements primaires à regrouper. Selon une autre variante, l'interface définissant l'équipement manager a des tâches exécutées ou activées à travers un service en ligne, tel que serveur, passerelle, conjugué, etc., accessible à travers le réseau téléphonique RT.

Les interfaces de "constitution dynamique d'une page d'accueil" et "d'aide à la constitution dynamique d'une page d'accueil" sont incluses dans l'équipement manager lorsque celui-ci est un équipement primaire du groupe considéré.

Dans la suite de la description, la station de base EM=EP0=ST dans le groupe montré à la figure 1 est équipée comme un équipement manager EM.

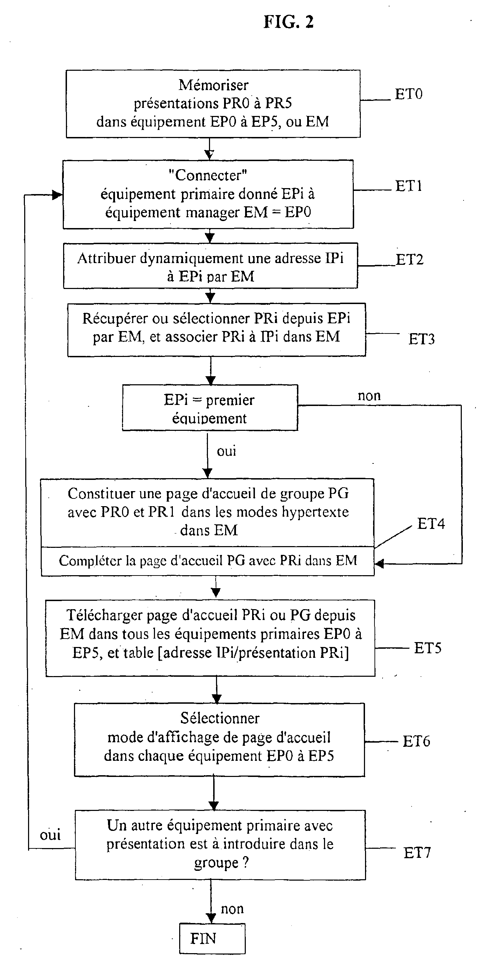

Comme montré à la figure 2, le procédé de mise en relation fonctionnelle d'équipements selon l'invention comprend huit étapes principales ET0 à ET7 qui sont relatives essentiellement à l'adjonction de l'un quelconque des équipements primaires EP1 à EP5, dénoté ci-après EPi, dans le groupe comprenant au moins l'équipement manager EM, i étant un entier compris entre 1 et 5.

Selon une caractéristique de l'invention, un équipement primaire EPi est identifié par une **présentation** PRi qui caractérise l'équipement de manière globale. Toutes les observations ci-après relatives à la présentation PRi de l'équipement EPi sont applicables à la présentation PR0 de l'équipement manager EM = EP0.

Une photographie de l'équipement l'identifie très simplement et est une présentation bien adaptée à un environnement grand public. Par exemple, la présentation est enregistrée suivant plusieurs dimensions et/ou suivant plusieurs formats, et/ou de manière plus détaillée suivant des usages principaux offerts par l'équipement. Selon d'autres variantes, cette présentation est la page du sommaire général des applications ou fonctions principales disponibles dans l'équipement primaire, ou bien un formulaire comprenant des rubriques textuelles à remplir et un lien, au sens de l'invention, par exemple une commande telle que "ENVOYER".

Une présentation d'un équipement primaire donné quelconque présente sa présentation en un ou plusieurs liens, afin que chaque lien constitue dans chaque équipement un pointeur, c'est-à-dire une ancre de départ sur laquelle l'utilisateur clique ou sélectionne pour spécifier une adresse d'une nouvelle page lue dans ledit équipement primaire donné, ou la commande du menu d'une fonction à exécuter dans ledit équipement primaire donné. Par exemple, l'adresse est une ancre d'arrivée de la page de sommaire des fonctions disponibles dans ledit équipement primaire donné.

Les liens dans la présentation de l'équipement primaire donné sont des liens internes dans l'équipement primaire donné, mais sont des liens externes dans les autres équipements.

Au sens de l'invention, les liens peuvent être des hyperliens qui ont des ancres de départ et des zones d'arrivée, adressées par des ancres d'arrivée, qui sont principalement en mode texte, c'est-à-dire comportent des caractères alphanumériques, et/ou en mode image par exemple comportant un schéma, un logotype ou une photographie identifiant l'équipement, et/ou peuvent être des représentations multidimensionnelles ou des icônes pour commander des fonctions, ou bien encore un lien multimédia à partir d'un cadre dans lequel défile une séquence vidéo. Les caractères et/ou image(s) peuvent être associés à du son et/ou à une séquence vidéo, ou bien des mots dans une séquence sonore ou des images dans une séquence vidéo peuvent être eux-mêmes des ancres de départ d'hyperliens ou des commandes. Par exemple, l'ancre de départ d'un hyperlien audio vers une séquence sonore présentant un sommaire de fonctions peut être un mot choisi prononcé devant un micro après que plusieurs mots de présentation aient été reproduits par synthèse vocale. Ainsi, ces divers modes d'hyperliens confèrent le caractère multimédia aux liens.

Lorsqu'un équipement primaire EPi n'est pas capable de gérer ou d'interpréter lui-même tous les modes de lien précités, il met à disposition des autres équipements primaires du groupe une présentation éventuellement plus riche PRi incluant par exemple au moins les deux modes de lien principaux, un lien en mode texte et un lien en mode image.

La présentation PRi est conçue et mémorisée en mémoire résidente de l'équipement EPi à l'étape ET0. Soit elle est conçue et chargée initialement par le constructeur de l'équipement, soit elle est conçue, modifiée et/ou complétée par l'utilisateur de l'équipement, par l'intermédiaire d'un téléchargement ou d'une saisie manuelle de l'utilisateur par exemple. Selon une autre variante, les présentations PR1 à PR5 des équipements EP0 à EP5 sont conçues et mémorisées au moins en partie dans l'équipement manager EM.

Cependant en variante, il est important pour un constructeur d'un équipement primaire EPi de ne pas permettre une mise à jour de la présentation PRi de l'équipement et de la protéger comme un signe déposé. Dans ce cas, l'équipement primaire refuse de considérer une page, telle qu'une page d'accueil, constituée dans un autre équipement et le fonctionnement hypermédia qui lui est associé, si l'équipement primaire ne reconnaît pas, par exemple, dans cette page d'accueil constituée, ou dans une page "fille" si la page d'accueil constituée a été hiérarchisée en plusieurs pages, la "signature" de la présentation qu'il vient de mettre à disposition. Plus précisément, l'équipement primaire refuse de considérer une ancre d'arrivée d'un hyperlien ayant pour origine dans une page d'accueil une ancre de départ pointée qui n'est pas la présentation de l'équipement primaire.

La première étape de mise en relation proprement dite ET1 consiste à "connecter" pour la première fois un équipement primaire donné EPi, à l'équipement manager EM. Selon le premier exemple illustré à la figure 1, l'équipement EPi, un périphérique mobile, signale sa présence, dans la zone de couverture de l'équipement EM, la station de base.

L' "appairage" de l'équipement manager EM et de l'équipement primaire donné EPi débute à l'étape ET2 par une demande d'**attribution dynamique d'une adresse** IPi transmise suivant le protocole DHCP à l'équipement primaire donné EPi par l'équipement manager afin que l'équipement manager à l'étape suivante ET3 récupère, ou bien sélectionne et envoie la présentation PRi de l'équipement primaire donné EPi.

Plus généralement l'équipement manager attribue des adresses respectivement différentes aux équipements primaires EP0 à EP5 au fur et à mesure de leur mise en relation fonctionnelle. Les adresses sont stockées dans une table de correspondance "adresses IPi/présentations PRi". L'équipement manager est alors capable d'accéder aux couches supérieures IP ou TCP/IP des équipements primaires en relation.

Chaque équipement est structuré comme un client/serveur identifié par son adresse IPi. Il comprend un navigateur (browser) élaboré en fonction de ses caractéristiques de visualisation et/ou de désignation : texte seul, texte et images, etc.

Le regroupement d'équipements s'effectue selon le choix d'un utilisateur de manière à limiter le nombre d'équipements regroupés et/ou définir des droits ou conditions d'utilisation de chaque équipement, etc.

Lorsqu'un équipement primaire à ajouter au groupe comporte déjà une interface "d'aide à la constitution dynamique d'une page d'accueil" et une interface "de constitution dynamique d'une page d'accueil", c'est-à-dire la fonction "équipement primaire" et la fonction "équipement manager", l'interface de "constitution dynamique d'une page d'accueil" est mise hors service par positionnement manuel, et/ou se met elle-même hors service si l'équipement primaire à ajouter n'est pas l'initiateur des équipements et/ou si l'équipement déjà déclaré manager lui demande de fournir sa présentation, par exemple, afin d'éviter des conflits de plusieurs équipements managers en présence dans le groupe.

Après avoir monté successivement ou simultanément les couches physiques permettant de se mettre en communication de données avec l'équipement primaire donné EPi au début de l'étape suivante ET3, l'équipement manager EM **récupère** par téléchargement **la présentation** PRi de l'équipement primaire EPi. En particulier sont récupérés la présentation textuelle et/ou imagée de l'équipement primaire EPi en hypertexte HTML ou en un langage compatible tel que XML, ainsi que chaque lien inclus dans la présentation PRi et donnant, accès à un objet, par exemple à une page de sommaire de fonctions ou directement à une fonction de l'équipement primaire EPi, par une adresse URL (Uniform Resource Locator) d'entrée qui contient des informations sur le cheminement à suivre pour accéder à l'objet. Plus généralement, la présentation récupérée est multimédia, c'est-à-dire contient des liens en modes texte, image, vidéo et son.

La présentation PRi de l'équipement primaire donné EPi est associée, en tant que fichier, à l'adresse IPi de l'équipement primaire donné EPi. La table de correspondance "adresses IPi/présentations PRi" est ainsi mise à jour dans l'équipement manager EM.

A l'étape suivante ET4, l'équipement manager EM ou bien constitue une **page d'accueil** de groupe PG avec la présentation PRO de l'équipement manager EM et la présentation PRi si l'équipement primaire donné EPi est le premier à être mis en relation avec l'équipement manager, ou bien complète avec la présentation PRi de l'équipement donné une page d'accueil déjà constituée avec la présentation PRO et les présentations d'équipements primaires déjà mis en relation. Dans la page d'accueil de groupe PG, par exemple une page HTML ou VRML, les présentations Pri correspondent aux adresses IPi rangées dans la table précitée, nécessaires au fonctionnement client/serveur. La création ou la suppression de la page d'accueil est l'outil qui maille dynamiquement des équipements primaires.

En général, l'équipement manager EM compose la page d'accueil selon deux modes, un mode texte et un mode image, chacun le cas échéant associé à du son et/ou de la vidéo.

La page d'accueil en mode texte contient les textes des présentations des équipements primaires placés automatiquement les uns par rapport aux autres dans la page d'accueil selon un programme de navigation prédéterminé (browser) résidant dans l'interface de "constitution dynamique d'une page d'accueil" de l'équipement manager. Par exemple, les présentations en mode texte sont présentées successivement de haut en bas au fur et à mesure de l'adjonction des équipements primaires, avec des liens hypertextuels externes HTML constitués par des mots ou des groupes de mots soulignés représentatifs des équipements primaires; une présentation en mode texte peut contenir la désignation de l'équipement immédiatement suivie d'une liste de quelques mots de fonctions réalisables par l'équipement considéré.

La page d'accueil en mode image contient les images des présentations des équipements placées automatiquement les unes par rapport aux autres dans la page d'accueil selon le programme de navigation prédéterminé (browser) résidant dans l'équipement manager. Par exemple, les présentations en mode image sont présentées successivement de la droite vers la gauche et de haut en bas au fur et à mesure de l'adjonction des équipements primaires. La présentation en mode image d'un équipement inclut au moins un lien en mode image constitué par exemple par une image, ou une séquence vidéo, encadrée par un filet de couleur et représentative de l'équipement primaire. L'image encadrée est une image cliquable, dite également image réactive.

En variante, un mode combinant les mots et les images des présentations constitue un autre mode de la page d'accueil. Par exemple, chaque présentation combine une image d'équipement et/ou des images de fonction avec un mot textuel d'équipement et/ou des mots textuels de fonction, et/ou selon une autre variante, avec un mot sonore d'équipement et/ou des mots sonores de fonction.

Chaque mode de la présentation est selon une autre variante organisé en tableau de cellules à taille réglée automatiquement, les cellules étant attribuées respectivement - aux présentations des équipements primaires.

Puis à l'étape ET5, l'équipement manager EM **télécharge** au moins la présentation PRi de l'équipement EPi et de préférence la page d'accueil de groupe PG constituée selon au moins les modes texte et image dans tous les équipements primaires EP0=EM à EP5. La page d'accueil précédemment mémorisée dans les équipements primaires déjà mis en relation dans le groupe est automatiquement effacée, ou selon une autre variante, est mise à jour. La table de correspondance "adresse IPi/présentation PRi" est également téléchargée par l'équipement manager EM pour mise à jour dans tous les équipements primaires EP1 à EP5.

La page d'accueil des équipements primaires EP0=EM à EP5 ainsi groupés constitue la présentation d'un équipement de groupe formée par la juxtaposition des présentations des équipements primaires groupés. L'équipement de groupe peut constituer un équipement primaire à ajouter dans un autre groupe à fonctions plus nombreuses par conséquent. La présentation de l'équipement de groupe est soit un hyperlien représentatif du groupe EP0=EM à EP5, soit l'ensemble des liens respectivement représentatifs de tous les équipements inclus dans le groupe EP0=EM à EP5, soit les deux. Dans ce cas, à l'étape ET5, la page d'accueil de groupe PG est également téléchargée dans l'équipement manager dudit autre groupe pour la diffuser vers les équipements primaires dans ledit autre groupe.

En réponse à la page d'accueil de groupe PG, chaque équipement primaire EP0=EM à EP5 sélectionne le **mode d'affichage de page d'accueil** le plus compatible avec ses caractéristiques d'affichage à l'étape ET6. Par exemple, si l'affichage dans l'équipement primaire n'est prévu qu'en mode texte, la page d'accueil affichée ne comporte que du texte ; si l'affichage est possible également en mode image, la page d'accueil affichée ne comporte que de l'image, ou du texte et de l'image combinés.

Le cliquage sélectif pointé sur l'ancre de départ d'un lien interne incluse dans la présentation d'un équipement primaire EPi et visualisée dans la page d'accueil chargée dans l'équipement primaire EPi donne accès à la liste sommaire des fonctions, ou bien sélectionne l'une des fonctions de l'équipement primaire EPi par exemple. Par cliquage sélectif pointé sur l'ancre de départ d'un lien externe dans la page d'accueil chargée dans l'équipement primaire EPi, la présentation d'un autre équipement primaire donnant accès par exemple à la liste sommaire des fonctions de cet autre équipement primaire, ou bien à l'une des fonctions de cet autre équipement primaire est sélectionnée. Ce cliquage sélectif permet à partir de n'importe quel équipement primaire, de bénéficier de tout ou partie des fonctions disponibles dans les autres équipements du groupe. Réciproquement, l'accès et l'utilisation de l'équipement primaire EPi est possible à partir de n'importe quel autre équipement du groupe.

Un ou plusieurs liens au niveau des fonctions de l'équipement primaire permettent le retour à la page d'accueil commune aux équipements, ou l'accès à la fonction d'un autre équipement. Ces liens sont établis par équipement primaire lui-même en réponse à la réception de la page d'accueil commune.

Puis à l'étape finale ET7, le cycle des étapes précédentes est réitéré chaque fois qu'un équipement primaire doit être admis dans le groupe déjà constitué. L'équipement manager EM complète la page d'accueil par la présentation de l'équipement primaire et la télécharge dans tous les équipements primaires, et chaque équipement primaire du groupe substitue la page d'accueil complétée à l'ancienne page d'accueil ou met à jour celle-ci. Le groupe d'éléments primaires EP0=EM à EP5 est ainsi progressivement enrichi de manière modulable par l'adjonction des fonctions disponibles dans des équipements primaires récemment admis au sein du groupe.

Dans l'exemple précédent, la relation entre l'équipement manager EP0 = EM, la station de base, et les équipements primaires EP1 à EP5, les périphériques mobiles, constitue l'équivalent d'un mini-réseau Intranet. Grâce à cette notion de mini-réseau Intranet, l'ensemble des équipements que l'on veut associer et/ou regrouper d'une manière dynamique en réseau local est choisi et/ou défini.

Une fois mis en relation, l'équipement primaire donné EPi accède aux informations disponibles dans un autre équipement du groupe en utilisant le protocole de transport HTTP. Toutefois, pour éviter d'établir une connexion entre ces deux équipements pour chaque objet recherché, la liaison entre ces deux équipements est maintenue pour transférer tous les objets d'une même page. Des éléments de formats différents, tels que textes traités, caractères accentués, images, sons, vidéo, etc., sont transmis suivant la spécification d'identification de format de fichier MIME (Multipurpose Internet Mail Extensions) afin que tout équipement puisse communiquer avec n'importe quel autre équipement. Les échanges entre équipements s'effectuent en mode TCP/IP.

Chaque équipement est équipé ou non d'éléments de navigation/sélection semblables ou différents, à savoir souris, clavier, écran tactile, reconnaissance de la parole, joystick, sélection/désignation par combinaison/déplacement curseur/touche validation clavier, et interface fonctionnant en attribuant un rang aux liens ou autres repérages.

Bien que chaque équipement offre sa propre interface homme/machine, l'équipement client accède ainsi à tout un groupe d'équipements en utilisant l'équipement dont l'interface homme/machine lui convient le mieux, c'est-à-dire l'équipement présentant le meilleur confort d'utilisation comportant écran, clavier, souris, etc. Ceci enrichit avantageusement, d'une manière modulable, notamment par substitution, les fonctionnalités offertes à l'équipement client et/ou propose une gamme simplifiée d'équipements avec clavier et/ou écran réduit(s), sachant que des opérations délicates peuvent être effectuées avec un maximum de confort et/ou de convivialité et/ou de sécurité à travers un équipement plus évolué, tel que micro-ordinateur, terminal d'accès Internet, etc.

La nature ainsi que les moyens de relier les équipements du groupe entre eux peuvent être différents, tels que connexions filaires, connexions sans fil de type GSM ou DECT, ou connexions à courants porteurs par exemple. Cependant, les équipements ayant des fonctionnements similaires par rapport au code hypertexte HTML et au navigateur (browser), l'invention donne la possibilité par exemple de programmer le magnétoscope dans l'équipement EP3=TM à partir des facilités dans l'équipement manager EM=ST, d'imprimer par le télécopieur EP2=FAX une page WEB en cours de consultation dans l'équipement EM, ou de programmer un régulateur d'installation de chauffage au moyen du clavier de la télécommande d'un équipement "téléviseur + télécommande", etc.

**D'autres exemples** de mises en oeuvre du procédé de l'invention orientés vers la mise en relation de quelques équipements avec des ensembles de fonctions connus sont décrits ci-après. Dans les présentations selon les exemples ci-après, les mots soulignés et les images dites images réactives sont des ancres de départ d'hyperliens HTML vers des équipements ou vers des pages ou fonctions relatives à des équipements.

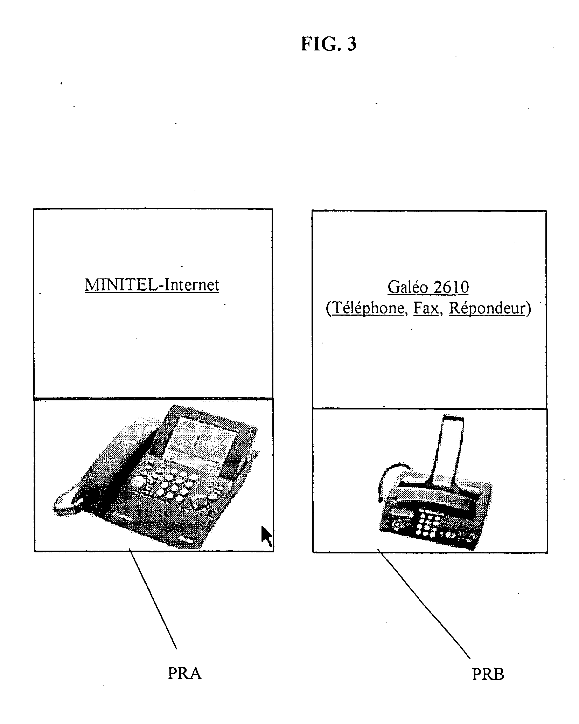

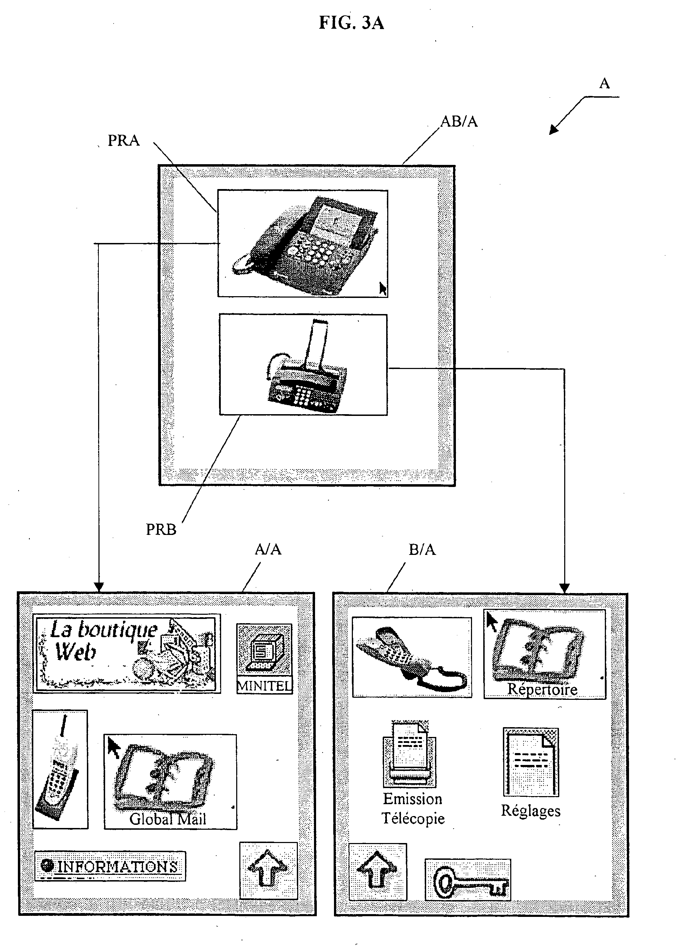

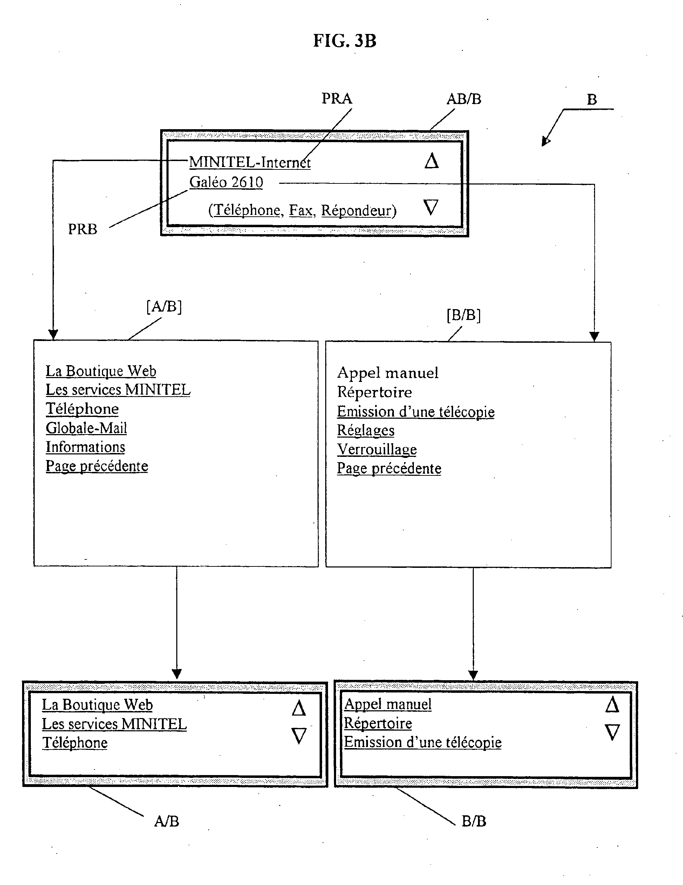

Selon un **deuxième exemple**, deux équipements primaires A et B présentent des présentations PRA et PRB montrées à la figure 3. L'équipement A est un terminal MINITEL-Internet disposant d'un écran et fonctionnant comme un équipement manager. Il a mémorisé une présentation PRA suivant le mode texte "MINITEL-Internet" et le mode image pour une photographie de l'équipement A (MINITEL est une marque enregistrée de FRANCE TELECOM). L'équipement B est un appareil téléphonique trifonctionnel de type Galéo 2610 incluant une barrette d'affichage de trois lignes de texte et a mémorisé une présentation PRB suivant le mode texte "Galéo 2610 (Téléphone, Fax, Répondeur)" et le mode image pour une photographie de l'équipement B (GALEO est une marque enregistrée de FRANCE TELECOM). La présentation PRB en mode texte inclut ainsi une désignation hypertextuelle de l'équipement B et de trois mots identifiant des fonctions réalisables par l'équipement B.

Les équipements A et B sont regroupés en un équipement de groupe AB dont la page d'accueil en hypertexte HTML est composée par l'équipement manager A en fonction des présentations PRA et PRB lues dans les mémoires des équipements A et B. L'équipement de groupe AB offrant les fonctions des deux équipements A et B est, grâce à l'invention, utilisable à partir de l'équipement A et/ou de l'équipement B et/ou d'un équipement externe au groupe AB si cet équipement externe et l'équipement de groupe AB sont inclus dans un autre groupe. Les fonctions de l'équipement AB ainsi constitué sont accessibles par hyperliens aussi bien à partir de l'équipement A que de l'équipement B.

L'écran de l'équipement A peut afficher des images réactives ou non contenues dans des pages HTML. L'équipement AB à partir de l'équipement A est donc utilisable en mode texte et/ou en mode image.

Comme montré à la figure 3A, la page d'accueil AB/A de l'équipement de groupe AB vue depuis l'équipement A est constituée des deux hyperliens en mode image dans les présentations PRA et PRB lues dans les équipements A et B. La disposition des présentations dans la page d'accueil AB/A est de la droite vers la gauche et de haut en bas ou, en variante, selon l'ordre alphabétique par exemple, et est imposée par l'équipement manager A. La désignation/sélection, c'est-à-dire le double cliquage sur l'image supérieure PRA dans la page d'accueil AB/A de l'équipement AB vue à l'écran de l'équipement A, par exemple au moyen d'une souris équipant l'équipement A, donne accès à la page d'accueil initiale A/A de l'équipement A pouvant avoir elle-même une présentation HTML composée de liens en mode texte et en mode image. La désignation/sélection de l'image inférieure PRB dans la page d'accueil AB/A de l'équipement AB vue depuis l'équipement A donne accès à la page d'accueil initiale B/A de l'équipement B mais présentée de préférence avec des images puisque la présentation du sommaire de l'équipement B est prévue avec des liens internes en mode texte et en mode image.

La barrette d'affichage de l'équipement B peut visualiser uniquement du texte et quelques graphismes particuliers. L'utilisation de l'équipement AB à partir de l'équipement B est donc possible uniquement en mode texte.

Comme montré à la figure 3B, la page d'accueil AB/B de l'équipement de groupe AB vue depuis l'équipement B est constituée d'un hyperlien externe de présentation en mode texte "MINITEL-Internet" vers l'équipement A, d'un hyperlien interne de présentation en mode texte "Galéo 2610" et de trois liens internes de sommaire en mode texte "(Téléphone, Fax, Répondeur)". La disposition des présentations PRA et PRB dans la page d'accueil AB/B est du haut vers le bas ou, en variante, selon l'ordre alphabétique par exemple, et est imposée par l'équipement primaire B. La désignation/sélection "MINITEL-Internet" par exemple par une touche ascenseur et une touche validation équipant l'équipement B donne accès à la page d'accueil [A/B] de l'équipement A lue en mode texte sans les images. La désignation/sélection "Galéo 2610" par les touches ascenseur et validation équipant l'équipement B donne accès à la page d'accueil [B/B] de l'équipement B. On retrouve alors le fonctionnement initial de l'équipement B avec des pages HTML visualisées sans image.

Selon la réalisation illustrée, l'équipement B est équipé d'une barrette d'affichage de trois lignes ce qui conduit à ne visualiser qu'une partie de la page d'accueil [A/B], [B/B] sur l'équipement B. Il est nécessaire d'effectuer un défilement vertical des lignes sur la barrette d'affichage de l'équipement B au moyen de la touche ascenseur pour prendre connaissance complètement de la page d'accueil [A/B], [B/B] comme montré en A/B, B/B dans la figure 3B.

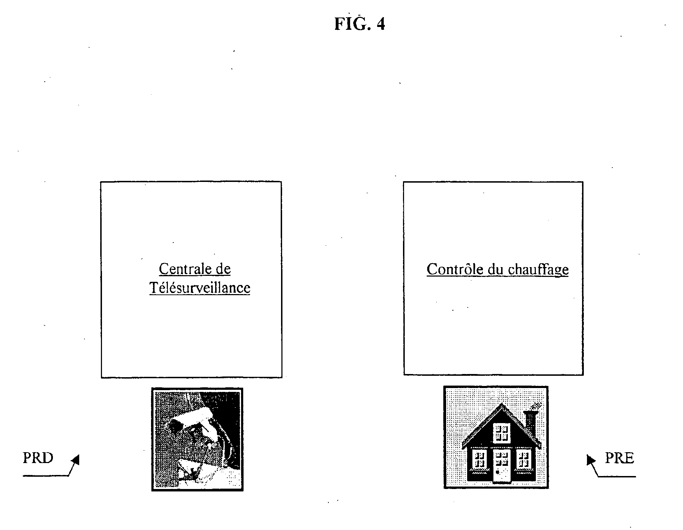

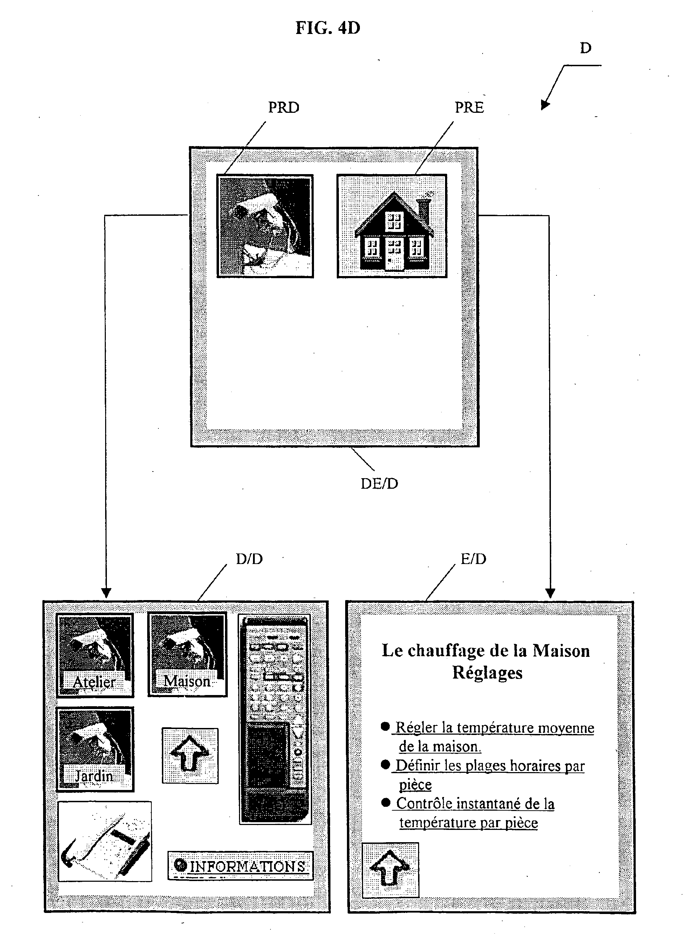

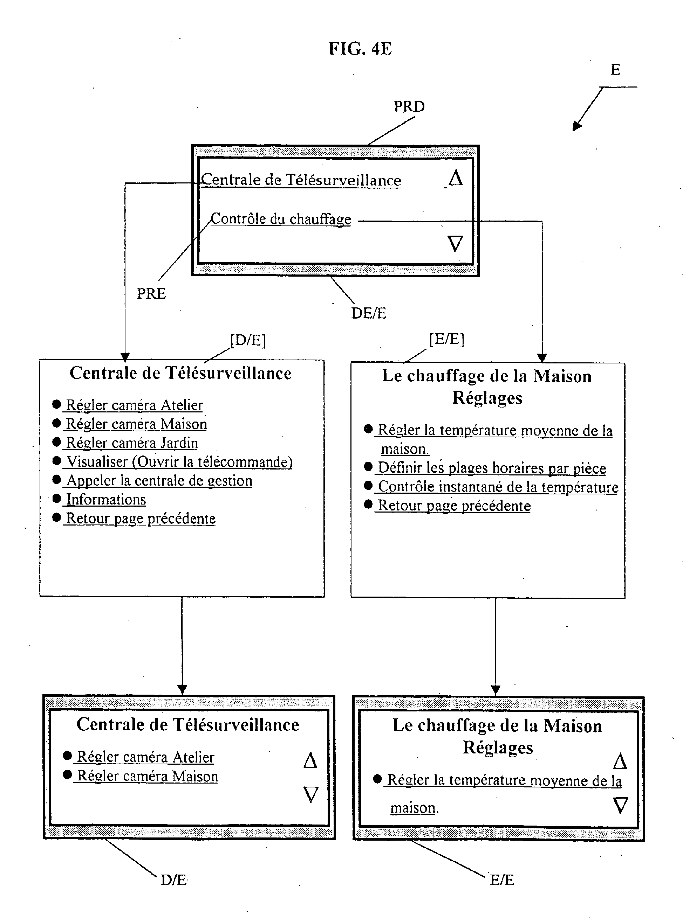

Selon un **troisième exemple**, deux équipements primaires D et E présentent des présentations PRD et PRE montrées à la figure 4. L'équipement D est un terminal de télésurveillance disposant d'un écran et fonctionnant comme un équipement manager. Il a mémorisé une présentation PRD suivant le mode texte "Centrale de Télésurveillance" et le mode image pour une photographie de l'équipement D. L'équipement E est un dispositif de contrôle et de réglage d'une installation de chauffage domestique incluant une barrette d'affichage de quatre lignes de texte et a mémorisé une présentation PRE suivant le mode texte "Contrôle du chauffage" et le mode image pour une photographie évocatrice du dispositif de contrôle et de réglage.

Les équipements D et E sont groupés en un équipement de groupe DE dont la page d'accueil en hypertexte HTML est composée par l'équipement manager D en fonction des présentations PRD et PRE lues dans les mémoires des équipements D et E. L'équipement de groupe DE offrant les fonctions des deux équipements D et E est, grâce à l'invention, utilisable à partir de l'équipement D et/ou de l'équipement E et/ou d'un équipement externe au groupe DE si l'équipement externe et l'équipement de groupe DE sont inclus dans un autre groupe. Les fonctions de l'équipement DE ainsi constitué sont accessibles par hyperliens aussi bien à partir de l'équipement D que de l'équipement E.

L'écran de l'équipement D peut afficher des images réactives ou non contenues dans des pages HTML. L'équipement DE à partir de l'équipement E est donc utilisable en mode texte et/ou en mode image.

Comme montré à la figure 4D, la page d'accueil DE/D de l'équipement de groupe DE vue depuis l'équipement D est constituée des deux hyperliens en mode image dans les présentations PRD et PRE lues dans les mémoires des équipements D et E. La disposition des présentations dans la page d'accueil DE/D est de la gauche vers la droite et de haut en bas ou, en variante, selon l'ordre alphabétique par exemple, et est imposée par l'équipement manager D. La désignation/sélection, c'est-à-dire le double cliquage sur l'image de gauche PRD dans la page d'accueil DE/D de l'équipement DE vue depuis l'équipement D, par exemple au moyen d'une souris équipant l'équipement D, donne accès à la page d'accueil initiale D/D de l'équipement D pouvant avoir elle-même une présentation HTML composée de liens en mode texte et mode image. La désignation/sélection de l'image de droite PRE dans la page d'accueil DE/D de l'équipement DE vue depuis l'équipement D donne accès à la page d'accueil initiale E/D de l'équipement E mais présentée seulement avec du texte et des liens en mode texte puisque la présentation du sommaire de l'équipement E n'est pas prévue avec des liens internes en mode image. En variante, la présentation PRE et les liens en mode texte dans la page d'accueil E/D sont accompagnés d'ancres d'arrivée désignant des messages sonores synthétisés respectifs.

La barrette d'affichage de l'équipement E peut visualiser uniquement du texte et quelques graphismes particuliers. L'utilisation de l'équipement DE à partir de l'équipement E est donc possible uniquement en mode texte.

Comme montré à la figure 4E, la page d'accueil DE/E de l'équipement de groupe DE vue depuis l'équipement E est constituée d'un hyperlien externe de présentation en mode texte "Centrale de Télésurveillance" vers l'équipement D, et d'un lien hypertexte interne de présentation en mode texte "Contrôle du chauffage". La disposition des présentations PRD et PRE dans la page d'accueil DE/E est du haut vers le bas ou, en variante, selon l'ordre alphabétique par exemple, et est imposée par l'équipement primaire E. La désignation/sélection "Centrale de Télésurveillance" par exemple par une touche ascenseur et une touche validation équipant l'équipement E donne accès à la page d'accueil [D/E] de l'équipement D lue en mode texte sans image. La désignation/sélection "Contrôle du chauffage" par des touches ascenseur et validation équipant l'équipement E donne accès à la page d'accueil [E/E] de l'équipement E. On retrouve alors le fonctionnement initial de l'équipement E avec des pages HTML visualisées sans image.

Selon la réalisation illustrée, l'équipement E est équipé d'une barrette d'affichage de quatre lignes ce qui conduit à ne visualiser qu'une partie de la page d'accueil [D/E], [E/E] sur l'équipement E. Il est nécessaire d'effectuer un défilement vertical des lignes sur la barrette d'affichage de l'équipement E au moyen de la touche ascenseur pour prendre connaissance complètement de la page d'accueil [D/E], [E/E] comme montré en D/E, E/E dans la figure 4E.

Selon un **quatrième exemple**, les équipements primaires précédents A, B, D et E sont groupés en un équipement de groupe ABDE. L'équipement de groupe ABDE offrant les fonctions des quatre équipements A, B, D et E est, grâce à l'invention, utilisable à partir de l'équipement A et/ou de l'équipement B et/ou de l'équipement D et/ou de l'équipement E et/ou d'un équipement externe si cet équipement externe et l'équipement du groupe ABDE appartiennent à un autre groupe. Les fonctions de l'équipement ABDE ainsi constitué sont accessibles par hyperliens à partir de l'un quelconque des équipements A, B, D et E.

Dans ce quatrième exemple, les équipements A et D sont équipés d'un écran pour afficher des images réactives et non réactives contenues dans des pages HTML. L'un des équipements A et D est l'équipement manager du groupe qui compose la page d'accueil en hypertexte HTML de l'équipement de groupe ABDE en fonction des présentations PRA, PRB, PRD et PRE lues dans les équipements A, B, D et E. L'équipement ABDE à partir de l'équipement A ou D est donc utilisable en mode texte et/ou en mode image.

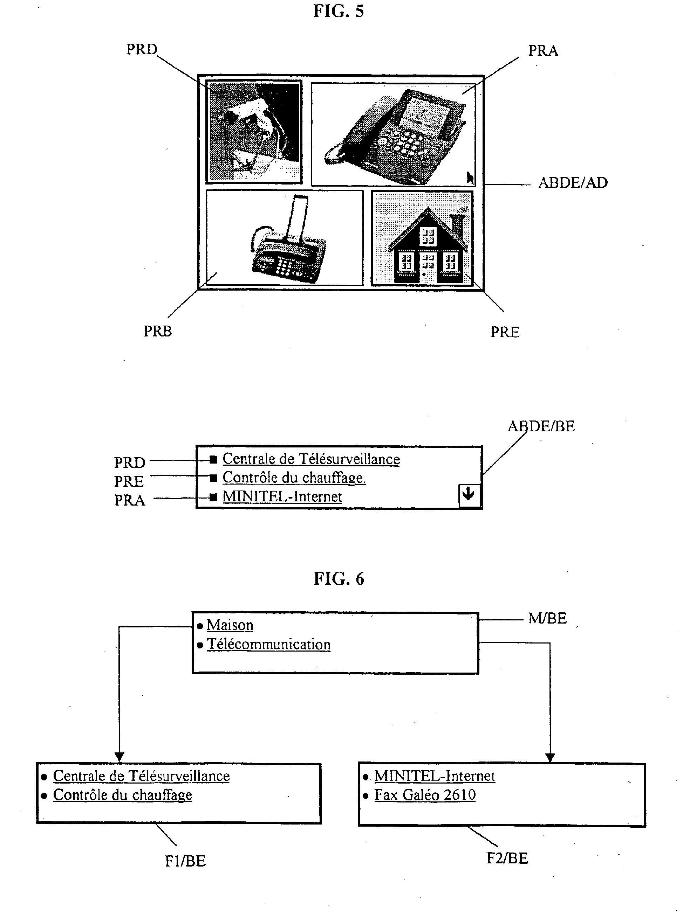

Comme montré à la figure 5, la page d'accueil ABDE/AD de l'équipement de groupe ABDE vue depuis l'équipement A ou D est constituée des quatre hyperliens en mode image dans les présentations PRA, PRB, PRD et PRE lues dans les mémoires des équipements A, B, D et E. La désignation/sélection de l'image "maison" ou de l'image "fax", c'est-à-dire le double cliquage sur l'image inférieure de droite PRE ou inférieure de gauche PRB dans la page d'accueil ABDE/AD de l'équipement de groupe ABDE vue depuis l'équipement A ou D au moyen de la souris équipant l'équipement A ou D, donne accès à la page d'accueil initiale (sommaire) de l'équipement primaire E ou B pouvant avoir elle-même une présentation HTML composée de liens en mode texte et en mode image si la présentation du sommaire de l'équipement E ou B est prévue avec des liens internes en mode texte et en mode image.

Les équipements B et E étant équipés chacun d'une barrette d'affichage pour visualiser uniquement du texte et quelques graphismes particuliers, la page d'accueil ABDE/BE de l'équipement de groupe ABDE vue depuis l'équipement B ou E est constituée des quatre hyperliens en mode texte dans les présentations PRA, PRB, PRD et PRE lues dans les équipements A, B, D et E. Seulement trois présentations PRD, PRE et PRA sont montrés à la figure 5 puisque les barrettes d'affichage dans les équipements B et E ne comportent que trois lignes pour liens.

Selon une variante montrée à la figure 6, pour éviter qu'une partie des hyperliens ne soient pas présentée directement à l'utilisateur, comme dans la barrette d'affichage montrée à la figure 5 où il manque l'hyperlien "Fax Galéo 2610" désignant l'équipement B, une page hypertextuelle "mère" et plusieurs pages hypertextuelles intermédiaires "filles" sont formées suivant par exemple des fonctions de même nature : maison, télécommunication. Pour utiliser l'équipement de groupe ABDE à partir de l'équipement B ou E, la page hypertextuelle "mère" M/BE comprend les ancres de départ "Maison" et "Télécommunication". La sélection de l'ancre de départ "Maison" donne accès à une page hypertextuelle fille F1/BE qui est dirigée vers les hyperliens relatifs à la maison de l'utilisateur, c'est-à-dire vers les présentations en mode texte des équipements D et E : "Centrale de Telésurveillance" "contrôle du chauffage". La sélection de l'ancre de départ "Télécommunication" donne accès à une page hypertextuelle fille F2/BE qui est dirigée vers les hyperliens relatifs à des services de télécommunication offert à l'utilisateur, tels que les présentations en mode texte des équipements A et B : "MINITEL-Internet", "Fax Galéo 2610".

Selon une autre variante similaire, des pages "mère" et "fille(s)" sont construites en mode image, par exemple lorsque les images des présentations des équipements primaires, c'est-à-dire les équipements regroupés, sont trop nombreux, ou les images des présentations sont trop grandes pour être visualisées sur un même écran. La construction de pages "mère" et "fille(s)" est effectuée par tout ou partie des équipements mis en relation, ou bien au moyen d'un service en ligne proposant par exemple une banque d'images.

Selon un **cinquième exemple**, des équipements sont exploités complètement si chaque équipement donne déjà, de manière autonome, accès à ses fonctions par des liens.

Lorsque des équipements E1, E2 et E3 sont déjà associés en un groupe suivant des principes différents de l'invention, de manière à former un équipement de groupe E123 tel qu'un dispositif de télésurveillance, il peut être suffisant d'adapter un seul des équipements en tant qu'équipement primaire selon l'invention, pour accéder à chacun des équipements du groupe. De préférence, l'équipement primaire est l'équipement du groupe qui a la plus grande liste de fonctions.

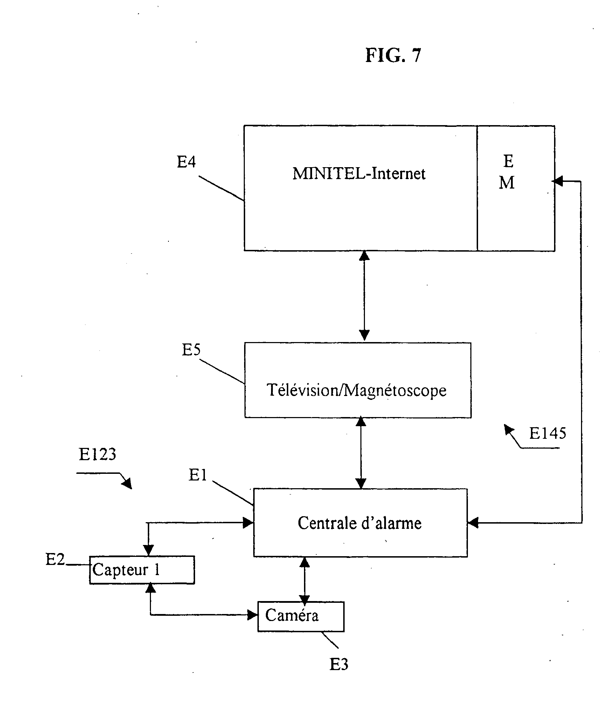

En référence à la figure 7, l'équipement E1 est une centrale d'alarme constituant l'équipement primaire du groupe E123 et dessert les équipements E2 et E3 tels qu'un capteur et une caméra qui ont gardé leur fonctionnement, initial et ne comprennent ni d'interface "d'aide à la constitution dynamique d'une page d'accueil", ni d'interface "de constitution dynamique d'une page d'accueil". L'équipement E1 est également un équipement primaire inclus dans un deuxième groupe E145. Ce deuxième groupe comprend en outre un terminal MINITEL-Internet disposant d'un écran et fonctionnant comme équipement manager E4 et un poste de télévision muni d'un magnétoscope en tant qu'équipement primaire E5, qui sont reliés à l'équipement E1.

Selon l'invention, le capteur E2 et la caméra E3 sont contrôlés et réglés à partir de l'équipement E1 ou de l'équipement E4 ou de l'équipement E5.

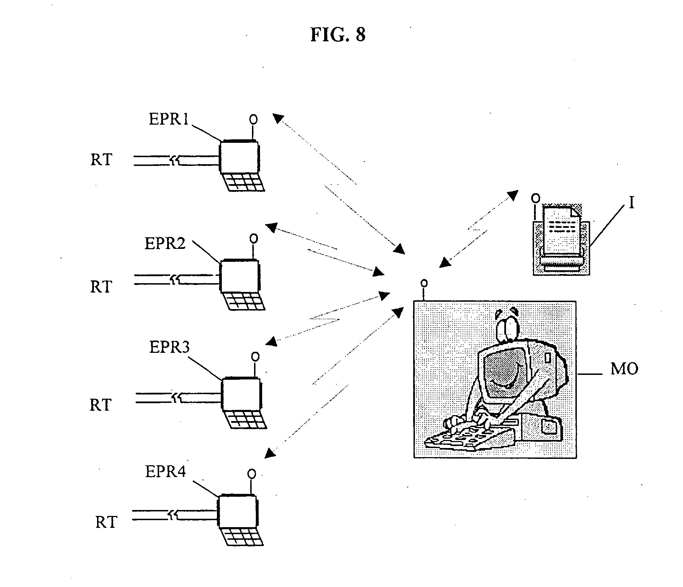

Selon un **sixième exemple** illustré à la figure 8, un équipement centralisé manager MO et des équipements primaires I et EPR1 à EPR4 conformes à l'invention sont respectivement un micro-ordinateur, une imprimante et des terminaux "MINITEL-Internet" ou des micro-ordinateurs de réseau (Net-computer) reliés entre eux à travers un système de transmission sans fil de type DECT. Les équipements EPR1 à EPR4 sont desservis par un réseau téléphonique RT pour accéder notamment au réseau Internet (WEB, E-Mail, News, etc..) et peuvent communiquer, suivant les caractéristiques de l'invention, avec l'équipement centralisé MO et l'imprimante I.

L'équipement manager MO est considéré, dans cet exemple, comme un moyen contenant plusieurs applications prédéterminées mises à la disposition des équipements EPR1 à EPR4. Des présentations TT, DI respectivement associées aux applications sont mémorisées dans l'équipement manager MO. La présentation d'application TT est une ancre de départ d'un hyperlien ou d'une commande en mode image et est sous la forme d'une image encadrée de la lettre W sur une feuille pour une application de traitement de texte transposée en langage HTML et vice versa. L'autre présentation d'application DI est aussi une ancre de départ d'un hyperlien ou d'une commande en mode image et est sous la forme d'une image encadrée de disque pour une application d'espace disque, par exemple constituant un disque virtuel réservé. L'équipement manager MO a également acquis des présentations PRI et MI1 à MI4 lues dans les équipements primaires I et EPR1 à EPR4.

Sous contrôle de l'utilisateur par exemple, l'équipement manager MO regroupe, conformément à l'invention, quatre applications prédéterminées de types MINITEL-Internet MI, traitement de texte TT, espace disque réservé DI et impression PRI en quatre postes de travail T1 à T4 de type terminal virtuel T1 = (MI1+TT1+DI1+PRI), T2 = (MI2+TT2+DI2+PRI), T3 = (MI3+TT3+DI3+PRI) et T4 = (MI4+TT4+DI4+PRI), le poste de travail Tj = (MIj +TTj +DIj +PRI) étant dédié à l'équipement primaire EPRj, j étant un entier compris entre 1 et 4.

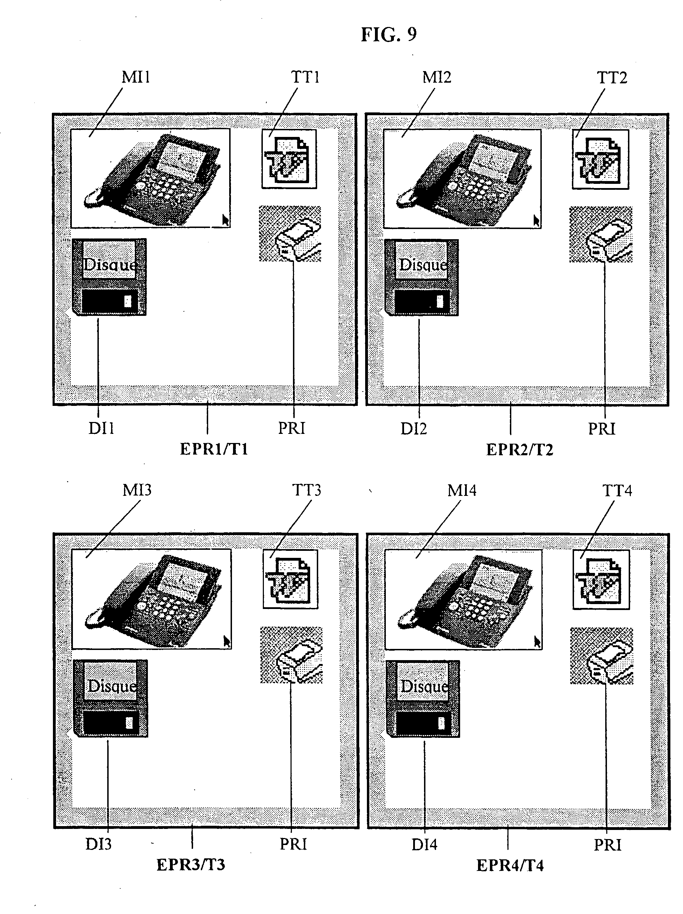

A l'étape ET4 de la figure 2, l'équipement manager MO compose des pages d'accueil EPR1/T1 à EPR4/T4 correspondant respectivement aux postes de travail T1 à T4, comme montré à la figure 9 et les télécharge respectivement dans les équipements primaires T1 à T4. La page d'accueil chargée dans l'équipement primaire EPRj comprend la présentation MIj de l'équipement EPRj, les deux présentations des applications offertes par l'équipement manager MO et la présentation PRI de l'imprimante I, c'est-à-dire les quatre applications du poste de travail Tj.

Chacune des applications dans le poste de travail Tj collabore avec n'importe quelle autre application dans le poste de travail Tj. Ainsi une composition de documents au traitement de texte, une sauvegarde de fichiers correspondants à ces documents dans un espace disque virtuel du disque dur de l'équipement manager MO, une impression de ces fichiers par l'imprimante I, et un accès à des services par l'intermédiaire du réseau Internet en ayant la possibilité de sauvegarder et/ou d'imprimer des pages d'informations consultées peuvent être initialisés à partir de chaque équipement primaire MINITEL-Internet EPRj en cliquant respectivement sur les présentations TTj, DIj, PRI et MIj visualisées dans la page d'accueil EPRj/Tj.

La configuration des équipements selon le sixième exemple convient particulièrement dans le milieu scolaire. L'équipement manager MO ayant un prix de revient élevé est mis sous la responsabilité d'un enseignant et donne des ressources, telles que éditeur de texte, disque dur et impression, à un nombre importants d'équipements primaires EPR1 à EPR4 ayant un prix de revient beaucoup plus faible; mis à la disposition d'un plus grand nombre d'élèves.

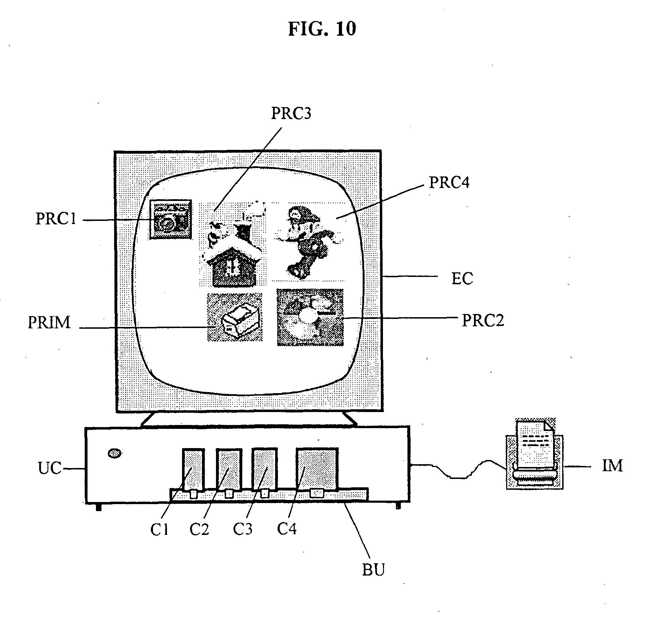

En référence maintenant à la figure 10, un équipement manager est l'unité centrale UC d'un micro-ordinateur à grouper avec des équipements primaires C1 à C4 et IM qui mémorisent des présentations respectives conformément à un **septième exemple** de l'invention. Les équipements primaires C1 à C4 sont des cartes électroniques connectées à un bus BU de l'unité centrale de micro-ordinateur UC, gèrent des applications respectives et ont en mémoires résidentes des présentations PRC1 à PRC4 au moins en mode image des applications respectives, comme montré à l'écran de micro-ordinateur EC relié à l'unité centrale UC dans la figure 10. Par exemple, l'équipement C1 gère une application de numérisation de photographies, l'équipement C2 gère une application de gestion de lecteur de disques CDROM, l'équipement C3 gère une application de gestion centralisée d'un chauffage domestique, et l'équipement C4 gère une application de console de jeux. L'équipement primaire IM a une présentation PRIM en mode image et est une imprimante reliée à l'un des ports série de l'unité centrale UC.

Dans ce septième exemple, il est inutile que l'unité centrale de micro-ordinateur UC fournisse une présentation aux équipements primaires C1 à C4 et IM. L'unité centrale UC est considérée uniquement comme "hôte" pour mettre des entrées/sorties telles qu'écran EC, clavier, souris, etc., à disposition des équipements primaires C1 à C4.

Après avoir récupéré les présentations PRC1 à PRC4 des applications disponibles dans les cartes C1 à C4 et la présentation PRIM de l'imprimante IM à l'étape ET3, l'équipement manager UC compose une page d'accueil à partir de ces présentations à l'étape ET4. La page d'accueil est gérée par l'équipement manager UC qui donne accès aux applications à partir de la page d'accueil et qui, le cas échéant, télécharge la page d'accueil dans les équipements primaires C1 à C4 et IM.

L'appel de l'un des équipements primaires initiaux C1 à C4 et IM ouvre la page d'accueil et donne accès aux applications ainsi regroupées.

En variante, la page d'accueil est constituée sous contrôle de l'utilisateur qui sélectionne les équipements ou les groupes d'équipements qu'il souhaite associer.

Le septième exemple illustre dans un groupe d'équipements l'introduction d'un équipement "secondaire" local, tel qu'écran EC, clavier, souris, facilitant une utilisation plus ergonomique des équipements primaires C1 à C4 et IM.

## Revendications

1. - Procédé pour mettre en interfonctionnement plusieurs équipements primaires (EP0 à EP5) et un équipement gestionnaire (EM) adaptés à utiliser chacun des liens vers des fonctions d'équipement, l'équipement gestionnaire étant susceptible de communiquer avec tous les équipements primaires à travers un système de transmission, **caractérisé en ce qu'**il comprend :
l'étape liminaire de mémoriser (ET0) des présentations d'équipements (PR0 à PR5) dans ceux-ci respectivement, la présentation de chaque équipement contenant au moins un lien vers une fonction de l'équipement ;
et les étapes suivantes :
attribuer dynamiquement (ET2) une adresse à un équipement primaire donné (EPi) par l'équipement gestionnaire,
récupérer (ET3) dans l'équipement gestionnaire (EM=EP0), la présentation (PRi) de l'équipement primaire donné (EPi), et
constituer (ET4) dans l'équipement gestionnaire une page d'accueil avec les présentations de l'équipement gestionnaire (EM), les présentations des autres équipements primaires déjà mis en interfonctionnement et la présentation récupérée de l'équipement primaire donné (EPi), et donner à chacun des équipement primaire donné (EPi) et équipements primaires déjà mis en interfonctionnement à travers l'équipement gestionnaire accès aux fonctions disponibles dans les équipements à partir des présentations dans la page d'accueil adaptées audit chacun équipement.

2. - Procédé conforme à la revendication 1, comprenant une étape de charger (ET5) la page d' accueil depuis l'équipement gestionnaire (EM) dans au moins l'un des équipements en tant que page d'accueil pour tous les équipements, afin que ledit au moins un équipement puisse mettre en oeuvre les fonctions des autres équipements.

3. - Procédé conforme à la revendication 1 ou 2, **caractérisé en ce que** les présentations (PRD ; PRE) sont affichées en plusieurs modes d'affichage respectivement dans des équipements et/ou dans au moins l'un des équipements, et la page d'accueil (DE/D ; DE/E) dans chaque équipement (D ; E) est visualisée (ET6) suivant au moins l'un de modes d'affichage utilisés dans l'équipement.

4. - Procédé conforme à l'une quelconque des revendications 1 à 3, **caractérisé en ce que** la présentation (PRA ; PRB) d'un équipement (A ; B) dans la page d'accueil (AB/A ; AB/B) comprend une ancre de départ d'un hyperlien vers une page de fonctions (A/A, A/B ; [A/B], [B/B]) lue dans l'équipement et contenant des liens vers des fonctions de l'équipement.

5. - Procédé conforme à l'une quelconque des revendications 1 à 4, comprenant, lors d'une première connexion d'un équipement primaire (EPi) à l'équipement gestionnaire (EM), une attribution dynamique (ET2) d'adresse (IPi) audit équipement primaire par l'équipement gestionnaire et une transmission (ET5) de l'adresse (IPi) par l'équipement gestionnaire aux équipements primaires avec la page d'accueil.

6. - Procédé conforme à l'une quelconque des revendications 1 à 5, **caractérisé en ce que** l'étape de constituer une page d'accueil est effectuée au moins partiellement en dehors de l'équipement gestionnaire (EM ; UC), dans un moyen secondaire (EC) pouvant être relié à l'équipement gestionnaire à travers un réseau téléphonique (RT) ou local (BU).

7. - Procédé conforme à l'une quelconque des revendications 1 à 6, **caractérisé en ce que** l'étape de constituer une page d'accueil comprend une répartition des présentations (A, B, D, E) d'équipements en des pages filles (F1/BE ; F2/BE) et une constitution d'une page mère (M/BE) avec des hyperliens vers les pages filles.

8. - Procédé conforme à l'une quelconque des revendications 1 à 6, **caractérisé en ce que** l'étape de constituer comprend la constitution (ET4) de pages d'accueil (EPRj/TTj) par l'équipement gestionnaire (M0) afin de charger les pages d'accueil dans des équipements primaires (EPRj), chacune des pages d'accueil (EPRj/TTj) comprenant la présentation (MIj) de l'équipement primaire respectif (EPRj) et des présentations (TTj, DIj) d'applications dans l'équipement gestionnaire dédiées à l'équipement primaire respectif.

9. - Procédé conforme à l'une quelconque des revendications 1 à 7, **caractérisé en ce que** l'étape de constituer comprend la constitution (ET4) d'une page d'accueil seulement avec les présentations des autres équipements primaires déjà mis en interfonctionnement et la présentation de l'équipement primaire donné (EPi), afin de charger (ET5) la page d'accueil depuis l'équipement gestionnaire (EM) dans tous les équipements primaires en tant que page d'accueil pour tous les équipements primaires.

10. - Procédé conforme à l'une quelconque des revendications 1 à 9, **caractérisé en ce que** l'équipement gestionnaire (EP0) et des équipements primaires (EP1 à EP5) sont reliés entre eux à travers un système de transmission sans fil, ou à travers un système de transmission à courant porteur, et sont respectivement un terminal (ST) pouvant être relié à un réseau téléphonique (RT) et des appareils électroniques (CT, FAX, TM, RE, DTV).

11. - Procédé conforme à l'une quelconque des revendications 1 à 9, **caractérisé en ce que** l'équipement gestionnaire et des équipements primaires sont reliés entre eux à travers un système de transmission sans fil, ou à travers un système de transmission à courant porteur, et sont respectivement un micro-ordinateur (MO) et des terminaux (EPR1 à EPR4), les terminaux étant reliés à un réseau téléphonique (RT).

12. - Procédé conforme à l'une quelconque des revendications 1 à 9, **caractérisé en ce que** l'équipement gestionnaire et des équipements primaires sont respectivement une unité centrale de micro-ordinateur (UC) et des cartes électroniques (C1 à C4) connectées à un bus (BU) de l'unité centrale (UC).

## Claims

1. Method for establishing interworking between a plurality of primary equipments (EP0 to EP5) and a manager equipment (EM) each adapted to use links to equipment functions, the manager equipment being able to communicate with all the primary equipments via a transmission system, **characterized in that** it comprises:
the preliminary step (ET0) of storing equipment presentations (PR0 to PR5) in the latter, respectively, the presentation of each equipment containing at least one link to a function of the equipment;
and the following steps:
the manager equipment dynamically assigning (ET2) an address to a given primary equipment (EPi),
the manager equipment (EM=EP0) recovering (ET3) the presentation (PRi) of the given primary equipment (EPi), and
constituting (ET4) in the manager equipment a home page with the presentations of the manager equipment (EM), the presentations of the other primary equipments already interworking and the recovered presentation of the given primary equipment (EPi), and giving each of the given primary equipment (EPi) and the other primary equipments already interworking via the manager equipment access to the functions available in the equipments on the basis of the presentations in the home page adapted to said each equipment.

2. Method according to Claim 1, comprising a step (ET5) of loading the home page from the manager equipment (EM) into at least one of the equipments as a home page for all the equipments, in order for said at least one equipment to be able to implement the functions of the other equipments.

3. Method according to Claim 1 or 2, **characterized in that** the presentations (PRD; PRE) are displayed in a plurality of display modes respectively in equipments and/or in at least one of the equipments, and the home page (DE/D; DE/E) in each equipment (D; E) is displayed (ET6) in at least one of the display modes used in the equipment.

4. Method according to any one of Claims 1 to 3, **characterized in that** the presentation (PRA; PRB) of an equipment (A; B) in the home page (AB/A; AB/B) comprises a starting anchor of a hyperlink to a page of functions (A/A, A/B; [A/B], [B/B]) read in the equipment and containing links to functions of the equipment.

5. Method according to any one of Claims 1 to 4, comprising, at the time of a first connection of a primary equipment (EPi) to the manager equipment (EM), the manager equipment dynamically assigning (ET2) an address (IPi) to said primary equipment and sending (ET5) the address (IPi) to the primary equipments with the home page.

6. Method according to any one of Claims 1 to 5, **characterized in that** the step of constituting a home page is effected at least partially outside the manager equipment (EM; UC), in secondary means (EC) that can be connected to the manager equipment via a telephone network (RT) or a local area network (BU).

7. Method according to any one of Claims 1 to 6, **characterized in that** the step of constituting a home page comprises distributing the presentations (A, B, D, E) of the equipments into daughter pages (F1/BE; F2/BE) and constituting a mother page (M/BE) with hyperlinks to the daughter pages.

8. Method according to any one of Claims 1 to 6, **characterized in that** the constitution step comprises the constitution (ET4) of home pages (EPRj/TTj) by the manager equipment (M0) in order to load the home pages into primary equipments (EPRj), each of the home pages (EPRj/TTj) comprising the presentation (MIj) of the respective primary equipment (EPRj) and presentations (TTj, DIj) of applications in the manager equipment dedicated to the respective primary equipment.

9. Method according to any one of Claims 1 to 7, **characterized in that** the constitution step comprises the constitution (ET4) of a home page only with the presentations of the other primary equipments already interworking and the presentation of the given primary equipment (EPi), in order to load (ET5) the home page from the manager equipment (EM) into all the primary equipments as the home page for all the primary equipments.

10. Method according to any one of Claims 1 to 9, **characterized in that** the manager equipment (EP0) and primary equipments (EP1 to EP5) are interconnected via a wireless transmission system or via a carrier current transmission system, and are respectively a terminal (ST) that can be connected to a telephone network (RT) and electronic devices (CT, FAX, TM, RE, DTV).

11. Method according to any one of Claims 1 to 9, **characterized in that** the manager equipment and primary equipments are interconnected via a wireless transmission system, or via a carrier current transmission system, and are respectively a microcomputer (MO) and terminals (EPR1 to EPR4), the terminals being connected to a telephone network (RT).

12. Method according to any one of Claims 1 to 9, **characterized in that** the manager equipment and primary equipments are respectively a microcomputer central processor unit (UC) and electronic circuit cards (C1 to C4) connected to a bus (BU) of the central processor unit (UC).

## Patentansprüche

1. Verfahren zum Herstellen einer Zusammenarbeit mehrerer primärer Geräte (EP0 bis EP5) und eines Steuergeräts (EM), die so beschaffen sind, dass sie jeweils Links zu Gerätefunktionen nutzen, wobei das Steuergerät in der Lage ist, mit allen primären Geräten über ein Übertragungssystem zu kommunizieren, **dadurch gekennzeichnet, dass** es enthält:
den vorherigen Schritt des Speicherns (ET0) von Gerätedarstellungen (PR0 bis PR5) in den jeweiligen Geräten, wobei die Darstellung jedes Geräts wenigstens einen Link zu einer Funktion des Geräts enthält;
und die folgenden Schritte:
dynamisches Zuschreiben (ET2) einer Adresse zu einem gegebenen primären Gerät (EPi) durch das Steuergerät,
Wiedergewinnen (ET3) der Darstellung (PRi) des gegebenen primären Geräts (EPi) in dem Steuergerät (EM = EP0) und
Aufbauen (ET4) einer Begrüßungsseite mit den Darstellungen des Steuergeräts (EM), den Darstellungen der anderen primären Geräte, für die bereits eine Zusammenarbeit hergestellt worden ist, und der wiedergewonnenen Darstellung des gegebenen primären Geräts (EPi) in dem Steuergerät und Gewähren eines Zugriffs auf in den Geräten verfügbaren Funktionen sowohl für das gegebene primäre Gerät (EPi) als auch für die primären Geräte, für die bereits eine Zusammenarbeit hergestellt worden ist, anhand der Darstellungen auf der Begrüßungsseite, die an jedes Gerät angepasst sind.

2. Verfahren nach Anspruch 1, mit einem Schritt des Ladens (ET5) der Begrüßungsseite von dem Steuergerät (EM) in wenigstens eines der Geräte als Begrüßungsseite für alle Geräte, damit wenigstens ein Gerät die Funktionen der anderen Geräte ausführen kann.

3. Verfahren nach Anspruch 1 oder 2, **dadurch gekennzeichnet, dass** die Darstellungen (PRD; PRE) auf mehrere Anzeigearten in den Geräten und/oder in wenigstens einem der Geräte angezeigt werden und die Begrüßungsseite (DE/D; DE/E) in jedem Gerät (D; E) gemäß wenigstens einer der in dem Gerät verwendeten Anzeigebetriebsarten angezeigt wird (ET6).

4. Verfahren nach einem der Ansprüche 1 bis 3, **dadurch gekennzeichnet, dass** die Darstellung (PRA; PRB) eines Geräts (A; B) auf der Begrüßungsseite (AB/A; AB/B) einen Startanker eines Hyperlinks zu einer Seite von Funktionen (A/A, A/B; [A/B], [B/B]), die in dem Gerät gelesen wird und Links zu den Funktionen des Geräts aufweist, enthält.

5. Verfahren nach einem der Ansprüche 1 bis 4, das bei einem erstmaligen Anschließen eines primären Geräts (EPi) an das Steuergerät (EM) eine dynamische Zuschreibung (ET2) einer Adresse (IPi) zu dem primären Gerät durch das Steuergerät sowie eine Übertragung (ET5) der Adresse (IPi) durch das Steuergerät an die primären Geräte mit der Begrüßungsseite enthält.

6. Verfahren nach einem der Ansprüche 1 bis 5, **dadurch gekennzeichnet, dass** der Schritt des Aufbauens einer Begrüßungsseite wenigstens teilweise außerhalb des Steuergeräts (EM; UC) in einem sekundären Mittel (EC) ausgeführt wird, das mit dem Steuergerät über ein Telephonnetz (RT) oder ein lokales Netz (BU) verbunden werden kann.

7. Verfahren nach einem der Ansprüche 1 bis 6, **dadurch gekennzeichnet, dass** der Schritt des Aufbauens einer Begrüßungsseite eine Aufteilung der Darstellungen (A, B, D, E) von Geräten auf Tochterseiten (F1/BE; F2/BE) und eine Bildung einer Mutterseite (M/BE) mit Hyperlinks zu den Tochterseiten umfasst.

8. Verfahren nach einem der Ansprüche 1 bis 6, **dadurch gekennzeichnet, dass** der Schritt des Aufbauens das Aufbauen (ET4) von Begrüßungsseiten (EPRj/TTj) durch das Steuergerät (M0) enthält, um die Begrüßungsseiten in die primären Geräte (EPRj) zu laden, wobei jede Begrüßungsseite (EPRj/TTj) die Darstellung (MIj) des jeweiligen primären Geräts und die Darstellungen (TTj, DIj) von Anwendungen in dem Steuergerät, die für das jeweilige primäre Gerät vorgesehen sind, enthält.

9. Verfahren nach einem der Ansprüche 1 bis 7, **dadurch gekennzeichnet, dass** der Schritt des Aufbauens das Aufbauen (ET4) einer Begrüßungsseite nur mit den Darstellungen der anderen primären Geräte, für die bereits eine Zusammenarbeit hergestellt worden ist, und mit der Darstellung des gegebenen primären Geräts (EPi) enthält, um die Begrüßungsseite von dem Steuergerät (EM) in alle primären Geräte als Begrüßungsseite für alle primären Geräte zu laden (ET5).

10. Verfahren nach einem der Ansprüche 1 bis 9, **dadurch gekennzeichnet, dass** das Steuergerät (EP0) und die primären Geräte (EP1 bis EP5) untereinander über ein drahtloses Übertragungssystem oder über ein stromführendes Übertragungssystem verbunden sind und jeweils ein Endgerät (ST), das mit einem Telephonnetz (RT) verbunden werden kann, und elektronische Geräte (CT, FAX, TM, RE, DTV) sind.

11. Verfahren nach einem der Ansprüche 1 bis 9, **dadurch gekennzeichnet, dass** das Steuergerät und die primären Geräte miteinander über ein drahtloses Übertragungssystem oder über ein stromführendes Übertragungssystem verbunden sind und ein Mikrocomputer (MO) bzw. Endgeräte (EPR1 bis EPR4) sind, wobei die Endgeräte mit einem Telephonnetz (RT) verbunden sind.

12. Verfahren nach einem der Ansprüche 1 bis 9, **dadurch gekennzeichnet, dass** das Steuergerät und die primären Geräte eine Mikrocomputer-Zentraleinheit (UC) bzw. elektronische Karten (C1 bis C4), die mit einem Bus (BU) der Zentraleinheit (UC) verbunden sind, sind.
